# EUROPEAN PATENT SPECIFICATION

(11) **EP 1 884 697 B1**
(45) Date of publication and mention of the grant of the patent: **28.10.2009**
(21) Application number: 06380223.5
(22) Date of filing: 02.08.2006
(51) Int. Cl.: F16K 31/04, F16K 31/524

(54) **Linear motor actuator for a three-way valve**
Linearmotorantrieb für ein Dreiwegeventil
Moteur linéaire pour une soupape à trois voies

(43) Date of publication of application: 06.02.2008
(73) Proprietor: ORKLI, S. COOP., 20240 Ordizia (Gipuzkoa) (ES)
(72) Inventor: Mujika, Jose Maria c/o Orkli, 20200 Beasain (Gipuzkoa) (ES); Kawanaka, Toshiro, Matsusaka-City, Mie Pref. (JP)
(74) Representative: Igartua, Ismael

(56) References cited:
- EP-A- 1 477 062
- FR-A1- 2 772 429
- JP-A- 56 024 274
- US-A- 5 568 911
- US-A1- 2002 179 164

## Description

The present invention relates to a valve actuator with an electric motor and linear transmission, adapted to a three-way water valve, and provided with a mechanism for converting rotational movement into two positions of the valve spindle and a rotary element operating an electrical stop switch.

### Prior art

An example of this type of linear transmission actuator is disclosed in US-A-5568911, wherein an actuator motor is fixed on a base in the actuator housing and its rotational movement transmitted by a reduction gear is converted into linear back-and-forth movement of a rotary member between two positions, matching up with the switching of the two input/output ways of the water valve. On this actuator the rotational movement conversion mechanism is the type that has two hollow cam members provided with ascending and descending ramps, which produces a transfer of the cam member farthest from the motor. This valve actuator also exhibits a two-position electric switch operated by a peripheral disc provided with a cam recess.

JP 3-168479 discloses a three-way water valve with a power-operated actuator, wherein the rotational movement of the motor spindle is changed by a converter mechanism into a linear movement of the valve spindle between two reciprocal axial positions, matching up with the switching of the two input/output ways of the valve. A peripheral cam wheel coupled to the drive shaft is provided with a cam recess which operates two breakers disposed with an angular offset of 180° between each other, so as to stop the rotation of the motor two times in each complete revolution. Each of the electrical breakers is provided with a pair of electrical contact strips, one of them a follower of the circular periphery of the wheel.

EP-A-1477062 discloses a linear valve actuator according to the preamble of claim 1.

### Disclosure of the invention

The object of the invention is to provide an actuator operated by means of a motor for a three-way valve, of the type that has the motor attached on a base to the actuator housing, comprising a drive spindle coupled to a mechanism for converting the rotation movement into linear movement for a valve spindle between two reciprocal axial positions, in which an electrical switching device is switched for motor start/stop, said mechanism being of the type with two cam members with ascending / descending ramps, wherein one of the two cam members is fixed against a motor support base and the second member can slide axially driven for its rotation by a third member coupled directly to the motor and provided with a peripheral wheel for the actuation of the electrical switching device.

The power-operated linear actuator according to the invention preferably has this second moving member in the form of a disc or hollow drum open on one side, which is also provided with an integrated central spindle extending between the drive spindle and the valve spindle for guiding its movement, thereby being able to carry out at the same time the two rotation and transfer movements needed to transmit the linear back-and-forth movement to the valve spindle between its two switching positions.

In the mechanism for conversion of the movement for the valve spindle, preferably the moving member farthest from the motor has an intermediate spindle extending between the drive spindle and the valve spindle for guiding purposes, and it is driven by the peripheral wheel coupled to the drive spindle. This particular arrangement of the conversion and transmission mechanism, with a fixed cam member, and the moving cam member being drawn from the motor by a third member independent of the two cam members, provides the advantage of a simple design in the form of a disc of the moving cam member, acting as a mere follower of the ramps of the fixed cam member, which permits the moulding of simple-shaped compact plastic pieces and enables the wear resistance of the friction surfaces to be improved and their service life to be extended.

A further object of the invention is to provide a valve actuator with a single moving member and said peripheral wheel for the operation of the electrical contacts moulded separately from the two cam members of the conversion mechanism, which is provided with two pairs of cam recesses offset at an angle of 90° between each other for the operation of two electrical start/stop breakers, by which the electrical power of the motor is switched in each rotation of the drive spindle, and the electrical control of the motor is thereby simplified and its power consumption is reduced, while at the same time the moulding of the movement converting mechanism is also simplified.

### Description of the drawings

FIG. 1 is a sectional view of a power-operated actuator for a three-way valve, showing the valve spindle in its axial position closest to the motor.
FIG. 2 is a sectional view of the valve actuator of figure 1, showing the valve spindle in its axial position farthest from the motor.
FIG. 3 is a perspective view of the valve actuator according to the position of the spindle in figure 2, deprived of the peripheral cam wheel.
FIG. 4 is a perspective view of a moving cam member for converting the movement in the valve actuator of figure 1.
FIG. 5 is a perspective view of the peripheral cam wheel of the actuator of figure 1.
FIG. 6 is a plan view of the actuator of figure 1, showing the peripheral cam wheel of figure 5 and an electrical switching device.

### Description of an embodiment of the invention

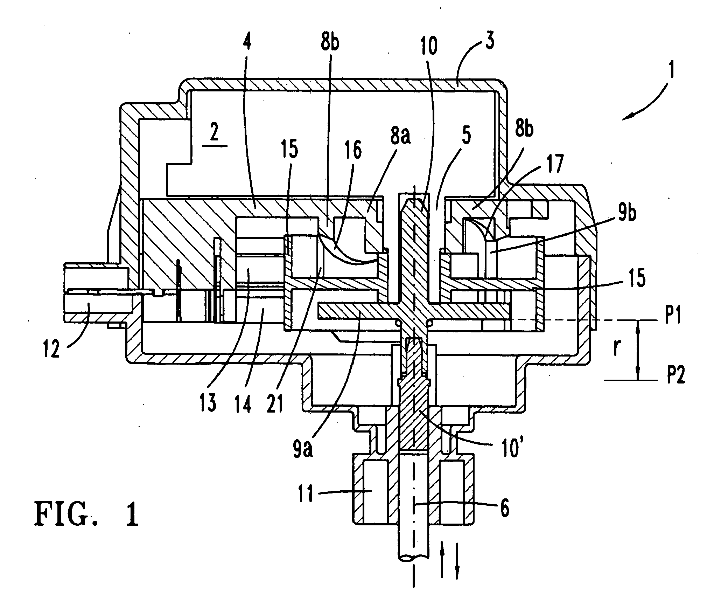

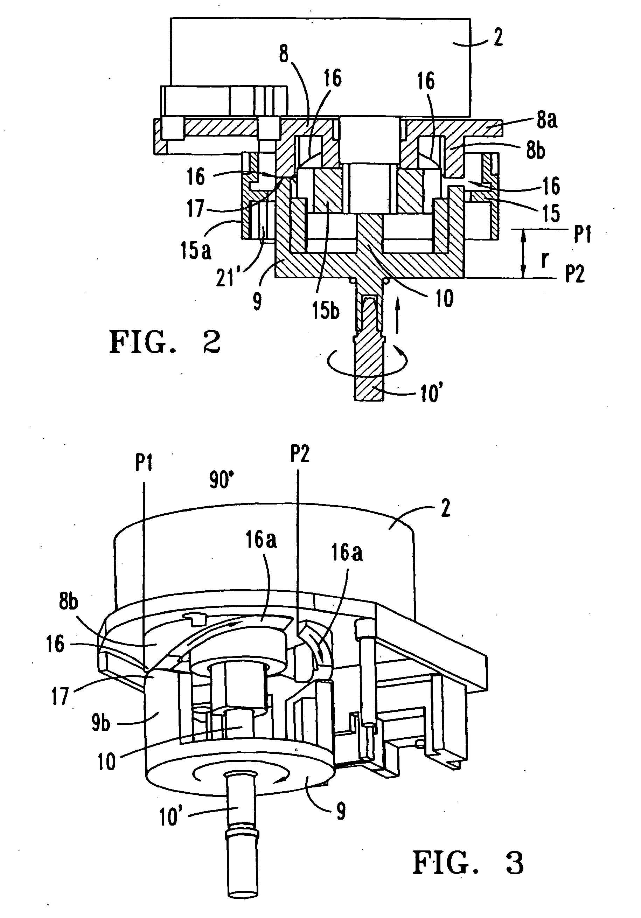

With reference to figures 1-6, one embodiment of linear valve actuator 1 comprises an electric motor 2, an actuator housing 3, a motor support base 4 fixed to the housing, and a low speed drive spindle 5, coupled to a three-way valve (not represented) like those used in domestic boilers. A valve spindle 6 acquires two axial positions P1,P2 for changing over the two valve input/output ways, matching up with the angle turned by drive spindle 5.It transmits the actuation of the motor 2 to the valve spindle 6 by means of a mechanism 8,9 for converting the rotation of the drive spindle 5, whose moving cam member 9 being rotary effects a linear back-and-forth movement between the two positions P1,P2, of an axial travel "r" (FIG. 1 and 2). The actuator housing 3 contains a tubular element 11 on the face opposite the motor 2 for coupling the valve spindle 6, an electrical switching device for start/stop motor switching in every rotational quadrant, and an external electrical connector 12. The actuation of the two electrical switches 13 and 14 forming the electrical switching device is effected by means of a peripheral cam wheel 15 for the electrical contacts rotated directly by the drive spindle 5. The peripheral cam wheel 15 is in turn coupled to the moving cam member 9, the latter driving in its rotation in a way that permits the moving cam member 9 its axial displacement along two guide grooves 22 in the peripheral cam wheel 15. The moving member 9 in the form of a cam disc is guided in its axial movement by a central intermediate spindle 10,10' extending on either side of the disc.

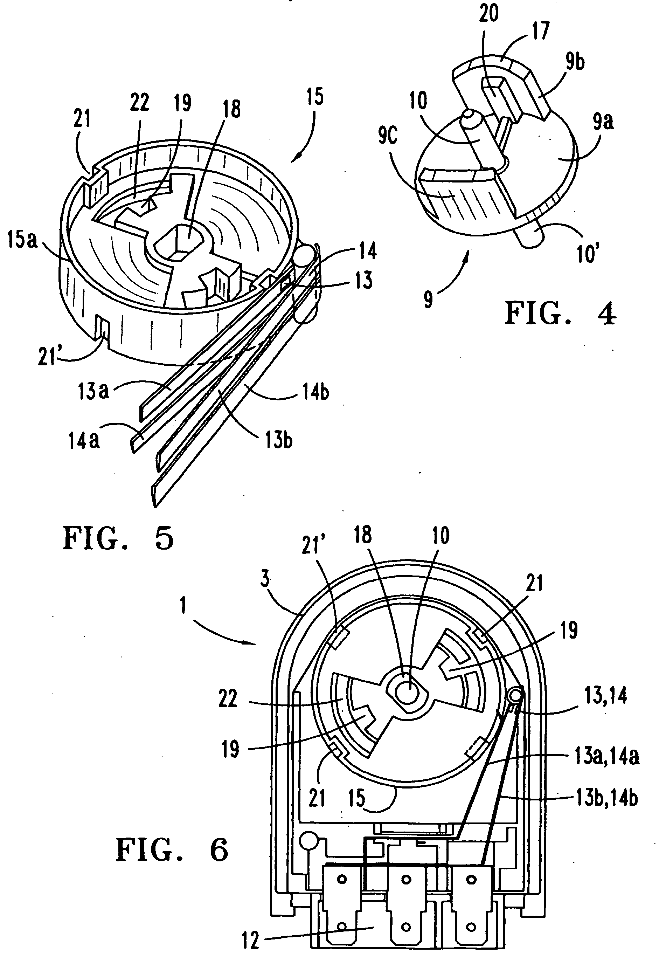

With reference to FIGS. 3 and 4, the movement converting mechanism 8,9 comprises a fixed cam member 8 (FIG.3), built from a base-plate 8a fixed to the housing 4 next to the motor 2, and the moving cam member 9 (FIG. 4) in the form of a cam disc away from the motor 2 with said integrated intermediate spindle 10,10', which guides the linear movement of the moving cam member 9 and transmits axial movement to the valve spindle 6. The fixed cam member 8 has ascending / descending cam ramps 16 formed on the rim of a cylindrical wall 8b extending from the base-plate 8a. The moving cam member 9 is disposed farther away from the motor 2 and it is interposed by means of its intermediate spindle 10,10' between the drive spindle 5 and the valve spindle 6. The moving cam member 9 is formed of a base disc 9a from which there extends a cam follower profile 17 in the form of a cylindrical wall 9b in opposition to the cam ramps 16. In the opposite axial direction there extends a second intermediate spindle 10' from the base-disc 9a for the coupling of the moving cam member 9 to the valve spindle 6.

The fixed cam member 8 anchor base-plate 8a is also used as a support base 4 for the motor 2. From it, distributed over a 360° periphery, there extend two cylindrical walls 8b which form four alternately ascending and descending ramps 16 each with an arc equal to 90°. Following the rotation of the drive spindle 5, the cam follower 17 of the moving cam member 9 traverses the ridges and troughs formed on the cam ramps 16. Each ascending or descending arc ramp equal to 90°, provides a movement "r" of the moving cam disc 9, around 7.5 mm, alternately in one axial direction and the other between reciprocal positions P1 and P2, and with it the respective actuation of the valve spindle 6 takes place. The cam follower 17 is of small extension, having an arc of less than 90°, with a rounded tip for sliding over the cam ramps 16. This sturdy compact construction of the moving cam member 9 with a small friction surface area successfully prevents the wear of the cams of the movement conversion mechanism and lengthens the service life of the actuator 1.

With reference to FIGS. 5 and 6, a constructional option is shown for the peripheral cam wheel 15, which is mounted around the moving cam member 9 and drives the latter in its rotation. The peripheral cam wheel 15 has a rotary cylindrical wheel 15a for actuating the contacts of the two electrical switches 13 and 14. The peripheral cam wheel 15 is coupled directly,fixed to the drive spindle 5 by way of a central engagement opening 18 and to the moving cam member 9 by way of two drive openings 19 counterposed in those which engage loosely with two drive ribs 20 on the moving cam member 9. Thus, the moving cam disc 9 and the peripheral cam wheel 15 are held in the same angular position relative to one another all the time. The cam follower 17 traverses the peripheral cam wheel 15 along a guide groove 22, which has an ample width in relation to the cylindrical wall 9b of the cam follower 17, in order that the latter may move axially in the guide groove 22. A second arched wall 9c extending parallel to the wall 9a of the cam follower 17, contributes to the guiding of the moving cam member 9 by way of the peripheral cam wheel 15.

According to a constructional option, the two electrical breakers 13,14 are formed by means of a respective pair of spring strips 13a,13b and 14a,14b, the same as each other but arranged at two height levels relating to the peripheral wall 15a of the cam wheel, so that each of them is closed alternately for the electrical switching of the motor 2 twice every complete revolution. To effect electrical switching of position P1 or P2 four times every revolution, on its peripheral wall 15athe wheel has two pairs of cam recesses 21,21' which actuate the moving contact strips 13a,14a of each breaker. The recesses 21,21' are distributed on the two height levels matching up with the moving contact strips 13a and 14a of each breaker, and they are offset 90° in relation to each other, so that one electrical breaker or the other 13,14 is closed in each rotational quadrant, coinciding with a position of the moving cam follower 17 on a peak or trough of the cam ramps 16. Thus, only a quarter turn of the motor is needed for the switching of the valve spindle 6 and an energy saving is achieved, besides a simplification of the movement conversion mechanism 7,8, which increases the service life of the actuator 1.

## Claims

1. Linear valve actuator adapted to a three-way valve used particularly for domestic boilers, the linear actuator including an electric motor (2), an actuator housing (3) and a support base (4) for the motor fixed to the housing (3), and a drive spindle (5) for the switching of an axial position (P1,P2) of a valve spindle (6), matching up with the angle turned by the drive spindle (5), wherein the drive spindle (5) transmits the actuation of the motor (2) to the valve spindle (6), by means of a movement conversion mechanism (8,9) of the cam profile type turning the rotation of the drive spindle (5) into a linear back-and-forth movement of a moving cam member (9), which transmits its axial movement (r) to the valve spindle (6) between two said axial positions (P1,P2), and an electrical switching device (13,14) for start/stop switching of the motor (2) at each of them, **characterised in that** the movement conversion mechanism (8,9) comprises
a fixed cam member (8), constructed from a base plate (8a) fixed to the housing (4) adjacent to the motor (2) and provided with at least one ascending / descending cam ramp (16),
a moving cam member (9) farther away from the motor (2) in the form of a rotary cam disc provided with respective drive and guidance means (9b,9c,10,10') for effecting both rotational and linear movements, said moving cam member (9) cooperating with said at least one ascending / descending cam ramp (16), and
a peripheral cam wheel (15), coupled directly to the drive spindle (5), for actuating the electrical switching device (13,14), wherein the moving cam member (9) is coupled to said peripheral cam wheel (15), so that said moving cam member (9) is driven by the peripheral cam wheel (15) in its rotation at the same time.

2. Linear valve actuator according to claim 1, wherein the at least one ascending / descending cam ramp (16) of the fixed cam member (8) has a conversion profile formed on an arched wall (8b) extending from a motor support base plate (8a), and the moving cam member (9) comprises an intermediate spindle (10,10') and a central support disc (9a) from which there extends, in opposition to the fixed conversion member (8), a wall (9b) constituted as a cam follower that traverses the at least one ascending / descending cam ramp (16) of the fixed cam member (8), thus successively determining one and the other of the two positions (P1,P2) of the valve spindle (6).

3. Linear valve actuator according to claim 2, wherein the arched wall (8b) of the fixed cam member (8) comprises four alternate cam ramps (16) each extending 90° for the switching of the position (P1,P2) of the valve spindle (6) in each rotational quadrant of the revolution of the motor (2).

4. Linear valve actuator according to claims 2 or 3, wherein the intermediate spindle (10,10') of the moving cam member (9) is interposed between the drive spindle (5) and the valve spindle (6), guiding the linear movement of the said moving cam disc (9) in order to transmit its axial movement (r) to the valve spindle (6).

5. Linear valve actuator according to any of the preceding claims, wherein the drive and guidance means (9b,9c,10,10') of the moving cam disc (9) comprise at least one projecting wall (9b,9c) extending towards the fixed cam member (8), traversing with clearance for its movement a guide groove (19,22) in the peripheral cam wheel (15), said wall (9b,9c) acting as a cam follower which runs over the at least one ascending / descending ramp (16) of the fixed cam member (8), for which purpose the angular position of the peripheral cam wheel (15) and the moving cam member (9) is maintained in relation to each other.

6. Linear valve actuator according to any of the preceding claims, wherein the peripheral cam wheel (15) is installed encircling the moving cam member (9) and has a peripheral cam profile (15a,21,21') operating the electrical switching device (13,14) for switching the motor in each rotational quadrant (90°) of the drive spindle (5).

7. Linear valve actuator according to claim 6, wherein the electrical switching device (13,14) comprises two breakers (13,14) with spring strips (13a,13b and 14a,14b).

8. Linear valve actuator according to claim 7, wherein the peripheral cam profile (15a,21,21') of the peripheral cam wheel (15) comprises two pairs of cam recesses (21,21'), each pair at a different height relative to the linear movement of the moving cam member (9), and each recess (21,21') offset a rotational angle of 90° relative to each other, and the two breakers (13,14) of the electrical switching device (13,14) are arranged at two respective height levels relative to the peripheral cam profile (15a,21,21') whereby each of the breakers (13,14) is closed alternately in one respective back and forth position (P1,P2) of the moving cam member (9).

## Patentansprüche

1. Lineares Ventilstellglied, angepasst an ein Dreiwegventil, insbesondere verwendet für Durchlauferhitzer für Privathaushalte, wobei das lineare Stellglied einen Elektromotor (2), ein Stellgliedgehäuse (3) und einen am Gehäuse (3) befestigten Tragesockel (4) für den Motor sowie ein Spindelantrieb (5) umfasst, um von einer axialen Position (P1,P2) der Ventilspindel (6) umzuschalten und den von des Spindelantriebs (5) eingenommenen Winkel überein zu stimmen, wobei der Spindelantrieb (5) den Antrieb des Motors (2) über einen nockenförmigen Mechanismus zur Bewegungsumwandlung (8,9) auf die Ventilspindel (6) überträgt, indem die Drehbewegung des Spindelantriebs (5) in eine lineare Vorwärts- und Rückwärtsbewegung eines beweglichen Nockenelements (9) umgewandelt wird, welches seine axial Bewegung (r) auf die Ventilspindel (6) zwischen den beiden axialen Positionen (P1,P2) überträgt, sowie eine elektrische Schaltvorrichtung (13,14) zum Umschalten des Motors (2) von Start auf Stopp an jeder dieser Positionen, **dadurch gekennzeichnet, dass** der Mechanismus zur Bewegungsumwandlung (8,9) umfasst
ein fixes Nockenelement (8), gefertigt aus einer Sockelplatte (8a), die auf dem Gehäuse (4) neben dem Motor (2) befestigt und mit mindestens einer ansteigenden / abfallenden Nockenflanke (16) versehen ist,
ein bewegliches Nockenelement (9), weiter entfernt vom Motor (2) in Form einer sich drehenden Nockenscheibe, ausgestattet mit dem jeweiligen Antrieb und Führungsvorrichtungen (9b,9c,10,10'), um sowohl Dreh- als auch lineare Bewegungen ausführen, wobei das bewegliche Nockenelement (9) mit der mindestens einen ansteigenden / abfallenden Nockenflanke (16) zusammenarbeitet, und
ein direkt mit dem Spindelantrieb (5) verbundenes Umfangnockenrad (15) zum Betätigen der elektrischen Schaltvorrichtung(13,14), wobei das bewegliche Nockenelement (9) mit dem Umfangnockenrad (15) so verbunden ist, dass das bewegliche Nockenelement (9) vom Umfangnockenrad (15) bei der Drehung gleichzeitig angetrieben wird.

2. Lineares Ventilstellglied gemäß Anspruch 1, wobei die mindestens eine ansteigende / abfallende Nockenflanke (16) des fixen Nockenelements (8) ein auf einer bogenförmigen Wand (8b) gebildetes Umwandlungsprofil aufweist, welches sich von einer Trageplatte des Motors (8a) erstreckt, und das bewegliche Nockenelement (9) eine mittlere Spindel (10,10') und eine mittlere Haltescheibe (9a) umfasst, von der aus sich entgegen des fixen Umwandlungselements (8) eine Wand (9b) erstreckt, welche als ein Nockenläufer ausgebildet ist, die die mindestens eine aufsteigende / abfallende Nockenflanke (16) des fixen Nockenelements (8) quert und somit nacheinander die eine oder andere der beiden Positionen (P1,P2) der Ventilspindel (6) bestimmt.

3. Lineares Ventilstellglied gemäß Anspruch 2, wobei die bogenförmige Wand (8b) des fixen Nockenelements (8) vier abwechselnde Nockenflanken (16) umfasst, welche sich jeweils in 90° erstrecken zum Umschalten der Position (P1,P2) der Ventilspindel (6) in jedem Drehquadrant der Drehung des Motors (2).

4. Lineares Ventilstellglied gemäß Anspruchs 2 oder 3, wobei die mittlere Spindel (10,10') des beweglichen Nockenelements (9) zwischen die Spindelantrieb (5) und die Ventilspindel (6) gesetzt wird und die lineare Bewegung der beweglichen Nockenscheibe (9) führt, um ihre axiale Bewegung (r) auf die Ventilspindel (6) zu übertragen.

5. Lineares Ventilstellglied gemäß einem der vorausgehenden Ansprüche, wobei die Antriebs- und Führungsvorrichtung (9b,9c,10,10') der beweglichen Nockenscheibe (9) mindestens eine vorstehende Wand (9b,9c) umfasst, welche sich auf das fixe Nockenelement (8) zu erstreckt und dabei mit Spiel für ihre Bewegung eine Führungsnut (19,22) im Umfangnockenrad (15) quert, wobei die Wand (9b,9c) als Nockenläufer fungiert, der über die mindestens eine aufsteigende / abfallende Flanke (16) des fixen Nockenelements (8) läuft, wozu die Winkelstellung des Umfangnockenrads (15) und das bewegliche Nockenelement (9) untereinander in Relation gehalten werden.

6. Lineares Ventilstellglied gemäß einem der vorausgehenden Ansprüche, wobei das Umfangnockenrad (15) so installiert ist, dass es das bewegliche Nockenelement (9) umgibt, und ein Umfangnockenprofil (15a,21,21') aufweist, welches die elektrische Schaltvorrichtung(13,14) zum Umschalten des Motors in jedem Drehquadrant (90°) der Spindelantrieb (5) betätigt.

7. Lineares Ventilstellglied gemäß Anspruch 6, wobei die elektrische Schaltvorrichtung (13,14) zwei Unterbrecher (13,14) mit Bandfedern (13a,13b und 14a,14b) umfasst.

8. Lineares Ventilstellglied gemäß Anspruch 7, wobei das das Umfangnockenprofil (15a,21,21') des Umfangnockenrads (15) zwei Nockenaussparungspaare (21,21') umfasst, wobei jedes Paar eine andere relative Höhe zur linearen Bewegung des beweglichen Nockenelements (9) aufweist und jede Aussparung (21,21') um einen 90°-Drehwinkel zueinander versetzt ist und die beiden Unterbrecher (13,14) der elektrischen Schaltvorrichtung(13,14) auf zwei respektiven Höhenstufen im Verhältnis zum Umfangsnockenprofil (15a,21,21') angeordnet sind, wodurch jeder der Unterbrecher (13,14) abwechselnd in der jeweiligen Rück- bzw. Vorwärtsposition (P1,P2) des beweglichen Nockenelements (9) geschlossen ist.

## Revendications

1. Actionneur linéaire adapté à une soupape à trois voies utilisée spécifiquement avec des chaudières domestiques, l'actionneur linéaire comprenant un moteur électrique (2), un boîtier (3) pour actionneur et une base d'appui (4) pour le moteur fixé au le boîtier (3) et une commande de la tige (5) pour la commutation d'une position axiale (P1,P2) d'une tige de soupape (6) qui épouse l'angle formé par la commande de la tige (5), où commande de la tige (5) transmet l'actionnement du moteur (2) à la tige de soupape (6) au moyen d'un mécanisme de conversion des mouvements (8,9) du type de profil de came changeant la rotation de la commande de la tige (5) dans un mouvement de va-et-vient linéaire d'un élément de came mobile (9), qui transmet son mouvement axial (r) à la tige de soupape (6) entre les deux positions axiales (P1,P2) en question et un dispositif de commutation électrique (13,14) pour démarrer/stopper la commutation du moteur (2) à chacune de ces positions, **caractérisé en ce que** le mécanisme de conversion des mouvements (8,9) comprend
un élément de came fixe (8) construit à partir d'une plaque de base (8a) fixée sur le boîtier (4) adjacent au moteur (2) et fourni avec au moins une rampe de came ascendante / descendante (16),
un élément de came mobile (9) plus éloigné du moteur (2) en forme de disque de came rotatif fourni avec les dispositifs d'entraînement et de guidage (9b,9c,10,10') respectifs pour exécuter les mouvements rotatifs et linéaires, ledit élément de came mobile (9) coopérant avec ladite au moins une rampe de came ascendante / descendante (16), et
une roue de came périphérique (15), couplée directement à la commande de la tige (5), pour l'actionnement du dispositif de commutation électrique (13,14) où l'élément de came mobile (9) est couplé à ladite roue de came périphérique (15), de telle manière que ledit élément de came mobile (9) est entraîné par la roue de came périphérique (15) dans sa rotation et au même moment.

2. Actionneur linéaire selon la revendication 1 où au moins une rampe de came ascendante / descendante (16) de l'élément de came fixe (8) présente un profil de conversion formé sur une paroi en arc (8b) qui s'étend depuis une plaque de base d'appui du moteur (8a), et l'élément de came mobile (9) comprend une tige intermédiaire (10,10') et un disque d'appui central (9a) depuis lequel s'étend, en opposition à l'élément de conversion fixe (8), une paroi (9b) qui ressemble à un galet de came qui traverse la rampe de came ascendante / descendante (16) qui est au mois une, de l'élément de came fixe (8), déterminant ainsi de manière successive les deux positions (P1,P2) de la tige de soupape (6).

3. Actionneur linéaire selon la revendication 2 où la paroi en arc (8b) de l'élément de came fixe (8) comprend quatre rampes de came alternatives (16) chacune d'entre elles s'étendant à 90° pour la commutation de la position (P1,P2) de la tige de soupape (6) dans chaque arc de guidage rotatif de la révolution du moteur (2).

4. Actionneur linéaire selon les revendications 2 ou 3, où la tige intermédiaire (10,10') de l'élément de came mobile (9) est interposé entre la commande de la tige (5) et la tige de soupape (6), en guidant le mouvement linéaire dudit disque de came (9) afin de transmettre son mouvement axial (r) à la tige de soupape (6).

5. Actionneur linéaire selon l'une quelconque des revendications précédentes où le dispositif d'entraînement et de guidage (9b,9c,10,10') du disque de came mobile (9) comprend au moins une paroi saillante (9b,9c) qui s'étend vers l'élément de came fixe (8), en traversant, avec de l'espace pour son mouvement, une rainure de guidage (19,22) dans la roue de came périphérique (15), ladite paroi (9b,9c) fonctionnant comme un galet de came qui évolue sur au moins la rampe ascendante / descendante (16)qui est au moins une, de l'élément de came fixe (8), raison pour laquelle la position angulaire de la roue de came périphérique (15) et l'élément de came mobile (9) sont maintenus l'une par rapport à l'autre.

6. Actionneur linéaire selon l'une quelconque des revendications précédentes où la roue de came périphérique (15) est installée de telle manière qu'elle encercle l'élément de came mobile (9) et présente un profil de came périphérique (15a,21,21') faisant fonctionner le dispositif de commutation électrique (13,14) pour commuter le moteur à chaque axe de guidage rotatif (90°) de la commande de la tige (5).

7. Actionneur linéaire selon la revendication 6 où le dispositif de commutation électrique (13,14) comprend deux disjoncteurs (13,14) avec des lamelles de ressort (13a, 13b et 14a, 14b).

8. Actionneur linéaire selon la revendication 7, où le profil de came périphérique (15a,21,21') de la roue de came périphérique (15) comprend deux paires d'évidements de came (21,21'), chaque paire située à une hauteur différente par rapport au mouvement linéaire de l'élément de came mobile (9) et chaque évidement (21,21') décale un angle rotatif de 90°, l'un par rapport à l'autre et les deux disjoncteurs (13,14) du dispositif de commutation électrique (13,14) sont disposés à deux hauteurs respectives par rapport au profil de came périphérique (15a,21,21') de manière à que chacun des deux disjoncteurs (13,14) est fermé alternativement dans une position de va-et-vient respective (P1,P2) de l'élément de came mobile (9).
